Europäisches Patentamt

European Patent Office

Office européen des brevets

(19)

(11) Veröffentlichungsnummer : **0 061 772**
**B1**

(12) **EUROPÄISCHE PATENTSCHRIFT**

(45) Veröffentlichungstag der Patentschrift :
13.06.84

(21) Anmeldenummer : **82102678.8**

(22) Anmeldetag : **30.03.82**

(51) Int. Cl.³ : **G 02 B   7/26**

(54) **Elektro-optischer Modulsteckverbinder.**

(30) Priorität : **01.04.81 DE 3113146**

(43) Veröffentlichungstag der Anmeldung :
**06.10.82 Patentblatt 82/40**

(45) Bekanntmachung des Hinweises auf die Patenterteilung : **13.06.84 Patentblatt 84/24**

(84) Benannte Vertragsstaaten :
**FR GB IT NL**

(56) Entgegenhaltungen :
**US-A- 4 047 797**
**THE BELL SYSTEM TECHNICAL JOURNAL, Band 58,
Nr. 3, März 1979, Seiten 713-720, New York, USA A.
ALBANESE et al.: "LED array package for optical
data links" * Seite 713, Zeile 28 - Seite 715, Zeile 8;
Abbildung 1 ***
**ELECTRONIC DESIGN, Band 28, Nr. 26, Dezember
1980, Seite 42, Waseca, Minnesota, USA S. OHR:
"Connector housings cut fiber-optic losses and
costs"**
**IBM TECHNICAL DISCLOSURE BULLETIN, Band 21,
Nr. 4, September 1978, Seiten 1568-1570, New York,
USA F.P. CEFARELLI et al.: "Optical circuit module
connector"**

(73) Patentinhaber : **SIEMENS AKTIENGESELLSCHAFT
Berlin und München Wittelsbacherplatz 2
D-8000 München 2 (DE)**

(72) Erfinder : **Hoffmann, Richard
Emil-Geis-Strasse 12
D-8000 München 70 (DE)**

## Beschreibung

Die Erfindung betrifft einen elektro-optischen Modulsteckverbinder mit Kontaktstiften zur Zuführung und Abnahme von Versorgungs- und Signalspannungen für die Sende- bzw. Empfängerdioden und einem Klammerteil zur Halterung und Positionierung von zugehörigen Lichtwellenleitern.

Bei den meisten bisher verwendeten optischen Ankoppelelementen tritt beim Lösen der Verbindungsstelle eine optische Trennung ein. Diese Elemente sind deshalb relativ voluminös, sehr teuer und aufwendig. Vorteilhafter ist es daher, feste optische Ankopplung vorzusehen und dafür die Trennung elektrisch vorzunehmen. Ein diesbezüglicher Ankoppelbaustein ist z. B. aus der DE-A 29 13 262 bekannt. In einem Kunststoffkörper werden eine Glasfaserader und ein Systemträger mit Sender bzw. Empfängerdiode über einen speziell gestalteten Durchgangskanal einander zugeordnet und gemeinsam vergossen. Die beiden Anschlußbeinchen können problemlos in Rasterbohrungen von Leiterplatten eingelötet weden. Sie könnten aber auch bei entsprechender Gestaltung und Oberflächenausführung als zweipoliger Steckverbinder verwendet werden. Da die Dicke des Kunststoffkörpers gleich dem Mittenabstand der Anschlüsse und die Ankoppelbausteine bei entsprechender Ausführung gestapelt werden können, läßt sich mit ihnen ein beliebigteiliges Anschlußelement aufbauen. Der elektrische Anschluß erfolgt dann über die beiden so entstehenden Kontaktstiftreihen. Die Anzahl der Stifte ist immer doppelt so groß wie die der angeschlossenen Glasfaseradern. Bei Laborversuchen hat es sich gezeigt, daß es vorteilhaft ist, auf der Empfängerseite unmittelbar hinter der Diode die Verstärkerschaltung anzuordnen, damit die durch die Glasfaser gewonnene Störsicherheit der Übertragungsstrecke nicht auf den kurzen elektrischen Anschlußwegen hinter der Empfangsdiode verlorengeht. Ein Chip, der Empfangsdiode und Verstärkerschaltung mit TTL-Ausgang beinhaltet, muß jedoch einen zusätzlichen Versorgungsspannungsanschluß erhalten. Dies würde bei der bekannten Anordnung drei Anschlußbeinchen bedeuten. Ein solcher Systemträger ist nicht ohne weiteres realisierbar und wäre für eine Anwendung in der Datentechnik zu voluminös.

Aufgabe der vorliegenden Erfindung ist es, einen elektro-optischen Modulsteckverbinder mit elektrischer Steckung und kleinen Abmessungen zu schaffen.

Zur Lösung dieser Aufgabe wird der eingangs genannte elektro-optische Modulsteckverbinder derart ausgebildet, daß auf der Rückseite eines Keramikplättchens ein integrierter Baustein sowie ein gedrucktes Leiterbild zur Verbindung der Bausteinanschlüsse mit mindestens zwei übereinander angeordneten Kontaktstiften, die in durchkontaktierten Bohrungen des Keramikplättchens befestigt sind, aufgebracht sind, daß über die Rückseite des Keramikplättchens ein Zentrierstück gesteckt ist, welches im Bereich des integrierten Bausteins und dessen Anschlüssen eine Mulde aufweist, und das in Fluchtung mit den integrierten Bausteinen Führungskanäle mit Einführtrichtern für die Aufnahme der Glasfasern von Lichtwellenleitern enthält, daß eine Lichtleiterhalterung, die aus zwei Halbschalen besteht, vorgesehen ist, daß die beiden Halbschalen entsprechend der Anzahl der zugeführten Lichtwellenleiter halbkreisförmige Führungsrillen aufweisen, in denen Haltestege angeordnet sind, daß jede Halbschale einen seitlich angebrachten senkrecht nach unten ragenden prismenförmigen Zapfen enthält, der in eine entsprechende Ausnehmung der jeweils anderen Halbschale beim Aufeinanderlegen eingreift, und daß Keramikplättchen, Zentrierstück und Lichtleiterhalterung von einer schachtelförmig gebogenen Klammer zusammengehalten werden, die an der Vorder- und Rückseite umbiegbare Blechlappen aufweist, wodurch die Einzelteile nach Einführen in die Klammer fixierbar sind.

Durch diese Maßnahme erhält man einen elektro-optischen Modulsteckverbinder mit kleinen Abmessungen, bei dem die Steckung elektrisch erfolgt. Dadurch ist die Reproduzierbarkeit der Übertragungsergebnisse stets gewährleistet. Die Grundkonzeption ist für Sende- und Empfangsmodulsteckverbinder gleichermaßen geeignet. Der Stecker ist für beliebige gradzahlige Kontaktstiftverbindungen erweiterbar und bei Ausfall eines Chips einfach zu reparieren.

Zur Erleichterung des Zusammenbaus können das Zentrierstück und die beiden Halteschalen Fließnasen aufweisen.

Zum Schutz der Halbleiterchips und der Verdrahtung ist es zweckmäßig, zwischen den Keramikplättchen und dem Zentrierstück eine Vergussmasse derart einzufüllen, daß über den integrierten Bausteinen eine dünne Schutzschicht entsteht.

Zur besseren Klemmwirkung der Lichtwellenleiter in den Kabelkanälen können die Haltestege sichelförmig ausgebildet sein.

Besonders vorteilhaft ist, die Kontaktstifte zweireihig und in gerader Anzahl anzuordnen. Dadurch können, ohne die vorgegebene Rasterung zu verlassen, mehrere Modulstecker zu einer größeren Einheit zusammengefaßt werden. Gleichzeitig ist damit für Sende- und Empfangsmodulsteckverbinder die gleiche konstruktive Ausgestaltung nach außen gewährleistet.

Der Unterschied im Inneren der Modulsteckverbindung zwischen Sende- und Empfangsmodulstecker besteht darin, dass beim Empfängermodulsteckverbinder jedem integrierten Baustein ein integrierter Verstärker zugeordnet ist.

Dadurch ergibt sich auch eine unterschiedliche Stiftbelegung zwischen Empfänger und Sendemodulsteckverbinder. Beim Empfängersteckver-

binder dient je ein Kontaktstift zur Zuführung einer Versorgungsspannung einer O-Volt Spannung und einer Kompensationsspannung, während beim Sendebaustein jedem Chip eine eigene O-Volt Spannung zugeführt wird. Dabei ist es günstig, den Modulsteckverbinder mit acht Kontaktstiften zu versehen, wobei jeweils vier Kontaktstifte der Sende- und Empfangsmodulstreckers als Signalkontaktstifte fungieren, während an den übrigen Kontaktstiften je nach Verwendungsart eine unterschiedliche Belegung erfolgt.

Der erste Kontaktstift der unteren Reihe kann dabei vorteilhaft zur Ausrichtung der aktiven Elemente wie Chips und Lichtfaserleiter in X- und Y-Richtung und der vierte Kontaktstift der unteren Stiftreihe zur Ausrichtung in Y-Richtung dienen.

Für den Zusammenbau mehrerer Steckmoduln zu einer größeren Einheit ist es vorteilhaft, daß die beiden Halbschalen der Lichtleiterhalterung an ihren Außenseiten mit Haltenasen versehen sind, die beim Einführen in die Klammer in einen vorgesehenen Einschnitt eingreifen, wobei sie aus der Klammer nach oben bzw. unten herausragen.

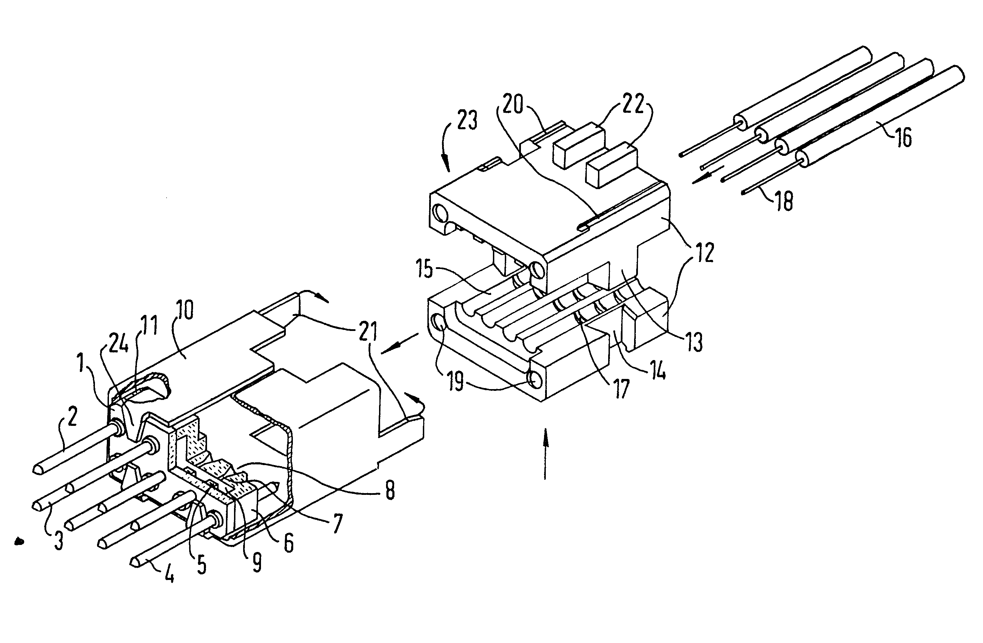

Anhand des Ausführungsbeispieles und der Figur wird die Erfindung näher erläutert.

Das Ausgangsteil des Quadro-Modul-Bausteines ist der Chipträger. Er besteht aus einem Keramikplättchen 1, acht Kontaktstiften, die in zwei Viererreihen in durchkontaktierte Löcher des Plättchens eingelötet sind. Der erste und der vierte Stift der ersten Reihe sind verlängert und dienen als Zentrierstifte für den gesamten Bausteinaufbau. Der erste Stift 3 ist der Bezugsstift. Nach ihm werden die lichtübertragendenelemente (Chip, Glasfaser) in X- und Y-Richtung ausgerichtet. Der vierte Stift 4 ist der Hilfsbezugsstift. Er dient zur Ausrichtung in der Y-Richtung. Die Stifte sind steckverbinderseitig als Kontaktstifte 2 mit einer Gold-über-Nickel-Oberfläche ausgeführt. Auf das Keramikplättchen ist bausteinseitig ein Leiterbild aufgebracht. Dieses ist für Sende- und Empfängerbausteine unterschiedlich, da die Stiftbelegung, wie oben erwähnt, eine andere ist. Die integrierten Bausteine 5, im folgenden der Kürze halber Chips genannt, mit den Sende bzw. Empfangsdioden werden justiert und mittels Leitkleber befestigt. Die Klebung stellt gleichzeitig einen elektrischen Anschluß, meist den für O V dar. Die anderen Anschlüsse werden mittels Bonddrähten durchgeführt. Über die Chips 5 wird das Zentrierstück 6 gestülpt. Dieses ist ein sehr genaues Kunststoffspritzgußteil, welches eine Vertiefung aufweist, in der die Chips mit den Bonddrähten liegen, und das den Chips zugeordnete zylindrische Führungskanäle 7 mit Einführtrichtern 8 für die Glasfaseraufnahme enthält. Es wird über die Verlängerung der Zentrierstifte 3, 4 genau ausgerichtet. Um die Spritzgußtoleranzen auszuschließen, kann das Zentrierstück nach dem Abspritzen gemessen werden und nach diesen Werten die Positionierung der Chips 5 auf dem Bausteinträger erfolgen. Der Hohlraum 9 im Zentrierstück 6 wird nun so mit entsprechender Vergußmasse ausgefüllt, daß über den Chips eine Schutzschicht von wenigen 1/10 mm entsteht oder der gesamte Hohlraum ausgefüllt wird. Die Vergußmasse kann auch zur Brechungsindexanpassung dienen. Dabei ist evtl. das Einführen von Nadeln in die Führungskanäle für die Glasfasern 18 notwendig, damit die Vergußmasse nicht infolge von Kapillarwirkung nach oben steigt. Der Bausteinträger 1 mit Zentrierstück 6 (Bausteinträgereinheit) wird in die Klammer 10 eingeschoben. Das Zentrierstück stützt sich durch vier Fließnasen 11 in der Klammer ab. Der Ankoppelbaustein ist somit vorbereitet für den Glasfaseranschluß.

Zwei Halbschalen 12 werden so zueinander auf Umschlag gebracht, daß der prismenförmige Zapfen 13 einer Schale in der entsprechenden Ausnehmung 14 der anderen leicht anschnäbelt. In vier halbkreisförmige Führungsrillen 15, deren Teilungsabstand dem der Chips entspricht, werden Glasfaseradern 16 eingelegt. Die beiden Halbschalen werden nun zu einem Block zusammengedrückt, so daß die Glasfasern eingeschlossen werden. Die prismenförmigen Zapfen und die dazugehörigen Ausnehmungen sind als Preßpassung ausgelegt. Sie bleiben also als Einheit zusammen. Die Führungsrillen für die Glasfaseradern sind dem Isolationsmanteldurchmesser angepaßt und am hinteren Ende mit jeweils drei sichelförmigen Haltestegen 17 versehen. Diese graben sich in den Kunststoffmantel ein und geben so den Glasfasern die notwendige Lagefixierung. Das der Diode zugewandte Glasfaserende 18 ist bis kurz vor dem ersten Haltesteg von der Isolation freigelegt. Es bieten sich für die Glasfasermontage zwei unterschiedliche Verfahren an:

1. Mittels eines Hilfswerkzeuges (Anschlag) werden die zugerichteten Glasfasern mit fertiger Stirnfläche (evtl. poliert) positioniert.

2. Die abisolierten Glasfaseradern werden zur Diode hin mit entsprechendem Übermaß zwischen die Halbschalen geklemmt. Ein Hilfswerkzeug wird aufgesetzt, und die vier Glasfasern werden gleichzeitig auf die richtige Länge gebracht und die Stirnseitenoberfläche poliert.

Diese vorbereitete Einheit wird in die Klammer geschoben. Über zwei der vier Löcher 19 in der Stirnseite der Einheit und die beiden Führungsstifte 3, 4 der Bausteinträgereinheit werden diese beiden Teile grob zueinander ausgerichtet. Beim Einschieben werden die Glasfaserenden von den Einführtrichtern 8 im Zentrierstück 6 gefangen und in die zylindrischen Führungskanäle 7 über den Chips 5 geleitet. Um die Preßfassung durch die die beiden Halbschalen zusammengehalten werden, zu entlasten, sind diese auf den Außenseiten mit Fließnasen 20 versehen, mit denen sie sich in der Klammer abstützen. Nun werden die beiden Blechlappen 21 der Klammer hinter den Halbschalen umgelegt. Der Quadro-Modul-Baustein ist nun an vier Glasfasern angeschlossen und bildet einen festen Block.

Der Quadro-Modul-Baustein kann als Einzelbaustein oder mehrere mit den Schmalseiten aneinandergesetzt, als Bausteinreihe verwendet werden. Die Anschlußstifte bilden dann eine Doppelreihe mit vorgegebener Rasterteilung. Um die Bausteine zusammenhalten zu können, sind die Halbschalen mit jeweils zwei Haltenasen 22 ausgerüstet, die aus der Klammer herausstehen. Die Nasen haben einen solchen Mittenabstand zueinander, daß sie mit dem vorgesehenen Raster harmonieren. Beim Einsatz z. B. in einem Leitungsstecker werden über die Nasen die Steck- und Ziehkräfte von den Bausteinen auf das Steckergehäuse übertragen.

Da Dioden eine begrenzte Lebensdauer haben, bzw. ihre Leistung nach einem bestimmten Zeitraum zurückgeht, muß die Möglichkeit bestehen, sie auf einfache Weise auszuwechseln. Bei Datenverarbeitungsanlagen werden die Kabel im Boden verlegt. Hier bleiben sie längere Zeit installiert, so daß an ein Auswechseln der gesamten Leitung einschließlich der Leitungsstecker nicht gedacht werden kann. Als Reparaturstelle kommt somit nur der Quadromodul-Baustein in Frage. Zum Auswechseln der Dioden wird die Klammer 10 gelöst und der Block aus den Halbschalen mit den vier Glasfasern daraus entfernt. Die Klammer 10 und die darin enthaltene Bausteinträgereinheit werden durch neue, vorbereitete Teile ersetzt. Die Glasfasern selbst brauchen nicht justiert zu werden.

## Ansprüche

1. Elektro-optischer Modulsteckverbinder mit Kontaktstiften zur Zuführung und Abnahme von Versorgungs- und Signalspannungen für die Sende- bzw. Empfängerdioden und einem Klammerteil zur Halterung und Positionierung von zugehörigen Lichtwellenleitern, dadurch gekennzeichnet, daß auf der Rückseite eines Keramikplättchens ein integrierter Baustein (5) sowie ein gedrucktes Leiterbild zur Verbindung der Bausteinanschlüsse mit mindestens zwei übereinander angeordneten Kontaktstiften (2), die in durchkontaktierten Bohrungen des Keramikplättchens (1) befestigt sind, aufgebracht sind, daß über die Rückseite des Keramikplättchens (1) ein Zentrierstück (6) gesteckt ist, welches im Bereich des integrierten Bausteins (5) und dessen Anschlüssen eine Mulde aufweist, und das in Fluchtung mit den integrierten Bausteinen (5) Führungskanäle mit Einführtrichtern für die Aufnahme der Glasfasern (18) von Lichtwellenleitern (16) enthält, daß eine Lichtleiterhalterung (23), die aus zwei Halbschalen (11) besteht, vorgesehen ist, daß die beiden Halbschalen (12) entsprechend der Anzahl der zugeführten Lichtwellenleiter (16) halbkreisförmige Führungsrillen (15) aufweisen, in denen Haltestege (17) angeordnet sind, daß jede Halbschale (12) einen seitlich angebrachten senkrecht nach unten ragenden prismenförmigen Zapfen (13) enthält, der in eine entsprechende Ausnehmung (14) der jeweils anderen Halbschale (12) beim Aufeinanderlegen eingreift, und daß Keramikplättchen (1), Zentrierstück (6) und Lichtleiterhalterung (23) von einer schachtelförmig gebogenen Klammer (10) zusammengehalten werden, die an der Vorder- und Rückseite umbiegbare Blechlappen (24, 21) aufweist, wodurch die Einzelteile nach Einführen in die Klammer fixierbar sind.

2. Elektro-optischer Modulsteckverbinder nach Anspruch 1, dadurch gekennzeichnet, daß das Zentrierstück (6) oben und unten entlang der Kanten in Längsrichtung Fließnasen (11) aufweist.

3. Elektro-optischer Modulsteckverbinder nach einem der vorhergehenden Ansprüche, dadurch gekennzeichnet, daß die beiden Halbschalen (12) auf ihren Oberseiten Fließnasen (20) aufweisen.

4. Elektro-optischer Modulsteckverbinder nach einem der vorhergehenden Ansprüche, dadurch gekennzeichnet, daß der Hohlraum (9) zwischen den Keramikplättchen (1) und dem Zentrierstück (6) derart mit einer Vergußmasse ausgefüllt ist, daß über den integrierten Bausteinen (5) eine dünne Schutzschicht entsteht, die zugleich Brechungsindexanpassung genutzt werden kann.

5. Elektro-optischer Modulsteckverbinder nach einem der vorhergehenden Ansprüche, dadurch gekennzeichnet, daß die Haltestege (17) der beiden Halbschalen (12) sichelförmig ausgebildet sind.

6. Elektro-optischer Modulsteckverbinder nach einem der vorhergehenden Ansprüche, dadurch gekennzeichnet, daß die Kontaktstifte (2) zweireihig in gerader Anzahl angeordnet sind.

7. Elektro-optischer Modulsteckverbinder nach einem der vorhergehenden Ansprüche, dadurch gekennzeichnet, daß bei Verwendung des Modulsteckverbinders als Empfänger jedem integrierten Baustein (5) ein integrierter Verstärker zugeordnet ist.

8. Elektro-optischer Modulsteckverbinder nach Anspruch 7, dadurch gekennzeichnet, daß mindestens je ein Kontaktstift (2) zur Zuführung einer Versorgungsspannung, einer 0-Volt Spannung und einer Konstantspannung dient.

9. Elektro-optischer Modulsteckverbinder nach einem der Ansprüche 7 oder 8, dadurch gekennzeichnet, daß der elektrische Anschluß eines Empfängermodulsteckverbinders aus acht Kontaktstiften besteht, von denen die unteren vier mit integrierten Bausteinen (5) verbunden sind und zwei der vier oberen Kontaktstifte zum Zuführen je einen 0-Volt Spannung und die übrigen jeweils zum Zuführen der Versorgungsspannung und der Kompensationsspannung dienen.

10. Elektro-optischer Modulsteckverbinder nach Anspruch 9, dadurch gekennzeichnet, daß bei der Ausbildung als Sendemodulsteckverbinder die oberen vier Kontaktstifte zur Zuführung der 0-Volt Spannung pro integriertem Baustein (5) dienen.

11. Elektro-optischer Modulsteckverbinder nach einem der Ansprüche 7 bis 10, dadurch gekennzeichnet, daß der erste Stift (3) der unteren Reihe als Bezugsstift zur Ausrichtung der aktiven Lichtwellenelemente (Chips) und Lichtleiterfaser in X-

und Y-Richtung und der vierte Stift (4) der unteren Kontaktstiftreihe als Hilfsstift zur Ausrichtung in Y-Richtung dient.

12. Elektro-optischer Modulsteckverbinder nach einem der vorhergehenden Ansprüche, dadurch gekennzeichnet, daß die beiden Halbschalen (12) der Lichtleiterhalterung (22) an ihren Außenseiten mit Haltenasen (22) versehen sind, die beim Einführen in die Klammer (10) in einen vorgesehenen Einschnitt eingreifen, wobei sie aus der Kalmmer nach oben bzw. unten herausragen.

**Claims**

1. An electro-optical plug-in module connector having contact pins for the supply and withdrawal of supply and signal voltages for transmitting or receiving diodes, as the case may be, and a clamping portion for holding and positioning assigned light waveguides, characterised in that, at the rear of a ceramic plate, there are arranged both an integrated circuit module (5) and a printed circuit for connecting the module contacts to at least two contact pins (2) arranged one above another which are fixed in through-contacted bores in the ceramic plate (1) ; that a centering element (6) has a trough in the region of the integrated circuit module (5) and the contacts thereof and which, in alignment with the integrated circuit modules (5), has guide channels having funnel-shaped inlets for the reception of glass fibres (18) of the light waveguides (16) ; that there is provided a light conductor holder (23) consisting of two half-shells (11), that the two half-shells (12) have semicircular guide grooves (15) which correspond to the number of the light waveguides (16) supplied, and in which there are arranged holding cross-pieces (17) ; that each half-shell (12) includes a laterally-mounted prism-shaped stud (13) which projects vertically downwards and engages in a corresponding recess (14) in the other half-shell (12) when the half-shells are placed one upon the other ; and that the ceramic plate (1), centering element (6) and light conductor holder (23) are held together by a clamp (10) which is bent to form a box and which at its front and rear has flat tabs (24, 21), which can be bent over, whereby the individual components can be secured after having been inserted into the clamp.

2. An electro-optical plug-in module connector according to Claim 1, characterised in that the centering member (6) has flow projections (11) extending above and below along the edges in the longitudinal direction.

3. An electro-optical plug-in module connector according to one of the preceding Claims, characterised in that the two half-shells (12) have flow projections (20) on their upper sides.

4. An electro-optical plug-in module connector according to one of the preceding Claims, characterised in that the space (9) between the ceramic plate (1) and the centering element (6) is filled with a sealing compound in such a way that above the integrated circuit modules (5), a thin protective layer is formed which simultaneously can be used for refractive index adjustment.

5. An electro-optical plug-in module connector according to one of the preceding Claims, characterised in that the holding cross-pieces (17) of the two half-shells (12) are sickle-shaped.

6. An electro-optical plug-in module connector according to one of the preceding Claims, characterised in that the contact pins (2) are arranged as an even number in two rows.

7. An electro-optical plug-in module connector according to one of the preceding Claims, characterised in that when using the plug-in module connector as a receiver, each integrated circuit module (5) is allotted an integrated amplifier.

8. An electro-optical plug-in module connector according to Claim 7, oharacterised in that at least one contact pin (2) serves as a supply lead for a supply potential, an O-volt potential and a constant potential.

9. An electro-optical plug-in module connector according to one of Claims 7 or 8, characterised in that the electric contact of a receiving plug-in module connector consists of eight contact pins, the lower four of which are connected to integrated circuit modules (5), and two of the four of which contact pins serve to supply an O-volt potential, the remaining contact pins serving to supply the supply potential and the compensation potential.

10. An electro-optical plug-in module connector according to Claim 9, characterised in that, in the form of a transmitting plug-in module connector, the upper four contact pins serve to supply the O-volt potential for each integrated circuit module (5).

11. An electro-optical plug-in module connector according to one of Claims 7 to 10, characterised in that the first pin (3) of the bottom row serves as a reference pin for aligning the active light wave elements (chips) and light conducting fibres in the X- and Y-directions, and the fourth pin (4) of the lower contact pin row serves as an auxiliary pin for aligning in the Y-direction.

12. An electro-optical plug-in module connector according to one of the preceding Claims, characterised in that the two half-shells (12) of the waveguide holder (22) are provided at their outer faces with holding projections (22) which on insertion into the clamp (10) engage with an opening therein, the holding projections protruding from the clamp towards the top or the bottom, as the case may be.

**Revendications**

1. Connecteur électro-optique enfichable modulaire comportant des broches de contact servant à amener et à prélever des tensions d'alimentation et des tensions de signaux pour les diodes d'émission et des diodes de réception, une partie formant pince pour le maintien et le positionnement de guides d'ondes de lumière associés, caractérisé par le fait qu'un module intégré (5) ainsi qu'un placage imprimé de conducteurs servant à relier les bornes du module à au moins deux broches de contact (2) superposées, qui sont fixées dans des perçages à contact traversant de la plaquette en céramique (1), sont disposés sur la face arrière de cette plaquette, que sur cette face arrière de la plaquette en céramique (1) est enfiché un organe de centrage (6) qui comporte une cavité au voisinage du module intégré (5) et de ses bornes et contient, dans une position de niveau avec les modules intégrés (5), des canaux de guidage comportant des entonnoirs pour la réception des fibres de verre (18) de guides d'ondes de lumière (16), qu'il est prévu un support (23) des guides de lumière, qui est constitué par deux demi-coques (12), que les deux demi-coques (12) possèdent, conformément au nombre des guides d'ondes de lumière (16) introduits, des rainures de guidage semi-cylindriques (15) dans lesquelles sont disposés des nervures de maintien (17), que chaque demi-coque (16) contient un tenon de forme prismatique (16) monté latéralement et faisant saillie verticalement vers le bas et qui s'engage dans une ouverture correspondante (14) de l'autre demi-coque (12) lors de la mise en superposition des demi-coques, et que la plaquette en céramique (1), l'organe de centrage (6) et le support (23) des guides de lumière sont maintenus réunis par une pince (10) recourbée en forme de boîte et qui possède des languettes en tôle (24, 21) pouvant être repliées contre la face avant et contre la face arrière, ce qui permet de bloquer dans la pince les différents éléments après leur introduction.

2. Connecteur électro-optique enfichable modulaire suivant la revendication 1, caractérisé par le fait que l'organe de centrage (6) comporte des becs élastiques (11) disposés en partie haute et en partie basse, s'étendant suivant la direction longitudinale.

3. Connecteur électro-optique modulaire enfichable suivant l'une des revendications précédentes, caractérisé par le fait que les deux demi-coques (12) comportent des rebords élastiques (20) sur leur face supérieure.

4. Connecteur électro-optique enfichable modulaire suivant l'une des revendications précédentes, caractérisé par le fait que la cavité (9) située entre la plaquette en céramique (1) et l'organe de centrage (6) est remplie par une masse de remplissage de telle sorte qu'il se forme, au-dessus des modules intégrés (5), une couche protectrice mince qui peut être utilisée simultanément pour une adaptation de l'indice de réfraction.

5. Connecteur électro-optique enfichable modulaire suivant l'une des revendications précédentes, caractérisé par le fait que les nervures de maintien (17) des deux demi-coques (12) sont réalisées en forme de croissant.

6. Connecteur électro-optique enfichable modulaire suivant l'une des revendications précédentes, caractérisé par le fait que les tiges de contact (12) sont disposées en un nombre pair sur deux rangées.

7. Connecteur électro-optique enfichable modulaire suivant l'une des revendications précédentes, caractérisé par le fait que dans le cas de l'utilisation du connecteur enfichable modulaire en tant que récepteur, un amplificateur intégré est associé à chaque module intégré (5).

8. Connecteur électro-optique enfichable modulaire suivant la revendication 7, caractérisé par le fait qu'au moins une tige de contact respective (2) sert à l'amenée d'une tension d'alimentation de 0 volt et à l'amenée d'une tension constante.

9. Connecteur électro-optique enfichable modulaire suivant l'une des revendications 7 ou 8, caractérisé par le fait que le raccord électrique d'un connecteur enfichable modulaire de réception est constitué par huit broches de contact, dont les quatre broches inférieures sont reliées à des modules intégrés (5), dont deux des quatre broches de contact supérieures servent respectivement à amener une tension de 0 volt et dont les autres servent respectivement à amener la tension d'alimentation et la tension de compensation.

10. Connecteur électro-optique enfichable modulaire suivant la revendication 9, caractérisé par le fait que dans le cas de la réalisation sous la forme d'un connecteur enfichable modulaire d'émission, les quatre broches supérieures de contact servent à amener la tension de 0 volt pour chaque module intégré (5).

11. Connecteur électro-optique enfichable modulaire suivant l'une des revendications 7 à 10, caractérisé par le fait que la première broche (3) de la rangée inférieure sert de broche de référence pour l'alignement des éléments actifs à ondes de lumière (microplaquette) et des fibres conductrices de lumière suivant les directions X et Y et que la quatrième broche (4) de la rangée inférieure de broches de contact sert de broche auxiliaire pour l'alignement suivant la direction Y.

12. Connecteur électro-optique enfichable modulaire suivant l'une des revendications précédentes, caractérisé par le fait que les deux demi-coques (12) du support (22) des guides de lumière sont munies, sur leurs faces extérieures, de tenons de maintien (22) qui, lors de l'introduction dans la pince (10), pénètrent dans une encoche prévue, ces tenons faisant saillie vers le haut ou vers le bas hors de la pince.